# EUROPEAN PATENT SPECIFICATION

(11) **EP 3 424 961 B1**
(45) Date of publication and mention of the grant of the patent: **18.11.2020**
(21) Application number: 17760109.3
(22) Date of filing: 01.03.2017
(51) Int. Cl.: C08C 19/02, C08F 8/04, B60C 1/00, C08K 3/04, C08K 3/36, C08L 15/00, C08L 91/00, C08C 19/22, C08C 19/25, C08F 236/10, C08L 9/00

(54) **RUBBER BASED ON HYDROGENATED CONJUGATED DIENE, RUBBER COMPOSITION, CROSSLINKED RUBBER, AND TIRE**
KAUTSCHUK AUF BASIS VON HYDRIERTEN KONJUGIERTEN DIENEN, KAUTSCHUKZUSAMMENSETZUNG, VERNETZTER KAUTSCHUK UND REIFEN
CAOUTCHOUC À BASE DE DIÈNE CONJUGUÉ HYDROGÉNÉ, COMPOSITION DE CAOUTCHOUC, CAOUTCHOUC RÉTICULÉ, ET PNEUMATIQUE

(30) Priority: 03.03.2016 JP 2016041466
(43) Date of publication of application: 09.01.2019
(73) Proprietor: JSR Corporation, Minato-ku Tokyo 105-8640 (JP)
(72) Inventor: ADACHI, Takumi, Tokyo 105-8640 (JP); SENGA, Hirofumi, Tokyo 105-8640 (JP); TOYOKAWA, Fumihiro, Tokyo 105-8640 (JP)
(74) Representative: TBK
(86) International application number: PCT/JP2017/008205
(87) International publication number: WO 2017/150645

(56) References cited:
- WO-A1-2009/060931
- WO-A1-2014/133097
- WO-A1-2015/064646
- WO-A1-2015/064646
- JP-A- H02 175 705
- JP-A- 2011 236 366
- JP-A- 2013 213 162
- US-A1- 2003 100 683
- US-A1- 2009 030 138
- US-A1- 2010 130 669
- US-A1- 2015 361 210
- US-A1- 2015 368 387

## Description

### Technical Field

The present invention relates to a hydrogenated conjugated diene-based rubber, a rubber composition, a crosslinked rubber, and a tire.

### Background Art

A conjugated diene-based rubber obtained by polymerization using a conjugated diene compound is satisfactory in various characteristics such as heat resistance, abrasion resistance, mechanical strength, and formability, and it has been widely used in various industrial products such as a pneumatic tire, an anti-vibration rubber, and a hose.

In rubber compositions to be used in the tread, sidewall, and the like of a pneumatic tire, in order to improve durability and abrasion resistance of the tire, it is known to blend a reinforcing agent such as carbon black or silica together with a conjugated diene-based rubber. Moreover, in order to enhance affinity of the conjugated diene-based rubber to silica and the like, a modified conjugated diene-based rubber in which an end of the conjugated diene-based rubber is modified with a compound containing silicone or nitrogen has been used (for example, an aminosilane compound) (e.g., see Patent Document 1).

Moreover, in recent years, it has been proposed to use a hydrogenation product of a modified conjugated diene-based polymer having a functional group such as an amino group or an alkoxysilyl group at one end or both ends to obtain a tire member having high tensile strength (fracture resistance) and low abrasion (see Patent Document 2).

### Related Art

### Patent Documents

Patent Document 1: Japanese Patent No. 4129619
Patent Document 2: WO2014/133097
Patent Document 3: WO2015/064646 A1
Patent Document 4: US2015/368387 A1
Patent Document 5: US2003/100683 A1
Patent Document 6: US2009/030138 A1
Patent Document 7: US2010/130669 A1

### Summary of the Invention

### Problems to Be Solved by the Invention

It is difficult to industrially produce a hydrogenated conjugated diene-based rubber which is blended in a conventional rubber composition because the hydrogenated conjugated diene-based rubber has unsatisfactory cold flow properties and unsatisfactory shape stability of the rubber, and thus there is room for further improvement. From industrial point of view, there is a demand for a rubber composition that is applied to tires by which a crosslinked rubber having high strength and enhancing fuel efficiency can be obtained and which has good processability.

The present disclosure is done in view of the above problems and an object is to provide a hydrogenated conjugated diene-based rubber which can give a crosslinked rubber having high strength and enhancing fuel efficiency and can give a rubber composition having excellent formability.

### Means for Solving the Problems

As a result of extensive studies for solving the above problems, the present inventors have found that the problems can be solved by using a specific rubber. Specifically, based on the present disclosure, the following hydrogenated conjugated diene-based rubber, rubber composition, crosslinked rubber, and tire will be provided.
[1] A hydrogenated conjugated diene-based rubber having a hydrogenation rate of butadiene unit of 90% or more, wherein the conjugated diene-based rubber is a copolymerized rubber of the conjugated diene compound and an aromatic vinyl compound having a randomly copolymerized portion in which the conjugated diene compound and the aromatic vinyl compound are irregularly distributed, and wherein, in the molecular weight distribution of the hydrogenated conjugated diene-based rubber as determined by a gel permeation chromatographic method, when a peak area of a molecular weight of 1,000 to 250,000 is taken as AL and a peak area of a molecular weight of 250,000 or more is taken as AH, the ratio of AL to the total area of AL and AH is 0.5% to 20%.
[2] A rubber composition containing 100 parts by mass of the hydrogenated conjugated diene-based rubber according to [1] and 10 to 100 parts by mass of an extender oil.
[3] A crosslinked rubber, which is obtained by crosslinking the rubber composition according to [2].
[4] A tire wherein the crosslinked rubber according to [3] is used as a material of at least a tread or a sidewall.

### Effects of the Invention

The present disclosure can provide a rubber composition having excellent formability. Moreover, a crosslinked rubber obtained by crosslinking the rubber composition has sufficiently high strength, sufficiently enhances fuel efficiency and is particularly suitable for tire.

### Embodiments for Carrying Out the Invention

The following will describe the items relating to the embodiments of the present disclosure in detail. Herein, the "hydrogenated conjugated diene-based rubber" means an assembly of the hydrogenated conjugated diene-based polymer. That is, one molecule of a polymer obtained by monomer polymerization and hydrogenation is represented as a "hydrogenated conjugated diene-based polymer" and an assembly of the polymer is represented as a "hydrogenated conjugated diene-based rubber". A numeral range described as ".. to .." means that it includes a lower limit and an upper limit of values described before and after the "to".

### [Rubber Composition]

### <Hydrogenated Conjugated Diene-based Rubber>

The rubber composition of the present disclosure contains a hydrogenated conjugated diene-based rubber that is a hydrogenation product of a conjugated diene-based rubber having a butadiene unit, as a rubber component. The hydrogenated conjugated diene-based rubber is hydrogenated so that the hydrogenation rate of the butadiene unit is 90% or more. Ninety percent or more of the hydrogenation rate of the hydrogenated conjugated diene-based rubber can provide a crosslinked rubber having sufficiently high mechanical strength. The hydrogenation rate is preferably 92% or more, more preferably 93% or more, and particularly preferably 94% or more. Moreover, an upper limit value of the hydrogenation rate is, from the viewpoint of preventing a decrease in productivity, preferably 99% or less, more preferably 98% or less, and still more preferably 97% or less. The hydrogenation rate in the present disclosure is a molar ratio of the total of the structural unit (B1) and the structural unit (B3) relative to the total of the structural units represented by the following formulae (B1) to (B4), i.e., the structural unit (B1), the structural unit (B2), the structural unit (B3), and the structural unit (B4), and is a value measured by ¹H-NMR

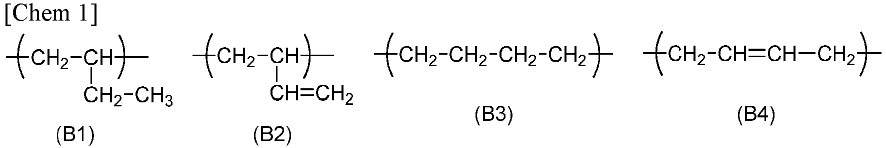

The above hydrogenated conjugated diene-based rubber contains a polymer component having a molecular weight range of 1,000 to 250,000 (hereinafter also referred to as "low-molecular-weight component") and a polymer component having a molecular weight range of 250,000 or more (hereinafter also referred to as "high-molecular-weight component"). The low-molecular-weight component and the high-molecular-weight component in the hydrogenated conjugated diene-based rubber is calculated from peak area of molecular weight distribution determined by a gel permeation chromatography (GPC) of the hydrogenated conjugated diene-based rubber.

The hydrogenated conjugated diene-based rubber which has a hydrogenation rate of 90% or more and is contained in the rubber composition of the present disclosure may be an assembly of a single polymer or may be an assembly of two or more kinds of polymers (polymer blend). That is, the molecular weight peak determined by GPC of a reaction product obtained by the polymerization may be skewed. Or, the ratio of the peak area contained in the above molecular weight range may be a certain value or more on the GPC chart by mixing two or more kinds of polymers.

The hydrogenated conjugated diene-based rubber preferably has one or more atoms selected from the group consisting of nitrogen, silicon, phosphorus, sulfur, oxygen, titanium, and tin. These atoms can improve dispersibility of a filler such as silica or carbon black and further enhance the low hysteresis loss. The hydrogenated conjugated diene-based rubber may have these atoms in the main chain, may have them at one end or both ends of the polymer, or may have them at a side chain. The weight-average molecular weight (Mw) of the hydrogenated conjugated diene-based rubber determined by GPC in terms of polystyrene is preferably 3.0×10⁵ to 2.0×10⁶, more preferably 3.5×10⁵ to 1.5×10⁶, and still more preferably 4.0×10⁵ to 1.0×10⁶.

The hydrogenated conjugated diene-based rubber preferably has one or more functional groups selected from an amino group, a group having a carbon-nitrogen double bond, a nitrogen-containing heterocyclic group, a phosphino group, a thiol group, and a hydrocarbyloxysilyl group at a polymer end. These functional groups may be introduced only into one end of the polymer or may be introduced into both ends. A preferable example of the structure that the hydrogenated conjugated diene-based rubber has at the polymer end includes a structure represented by the following formula (1): 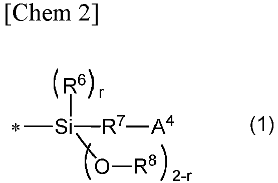 wherein A⁴ is a functional group which has one or more atoms selected from the group consisting of nitrogen, phosphorus, and sulfur and is bonded to R⁷ with nitrogen, phosphorus, or sulfur; R⁶ is a hydrocarbyl group and r is 0 to 2; R⁷ is a hydrocarbylene group; R⁸ is a hydrogen atom or a hydrocarbyl group; a plurality of R⁶ or R⁸ groups may be the same or different from each other; and "*" represents a bond to be bound to the polymer chain.

In the formula (1), the hydrocarbyl groups of R⁶ and R⁸ are preferably a linear or branched alkyl group having 1 to 20 carbon atoms, a cycloalkyl group having 3 to 20 carbon atoms, or an aryl group having 6 to 20 carbon atoms. The hydrocarbylene group of R⁷ is preferably a linear or branched alkanediyl group having 1 to 20 carbon atoms, a cycloalkylene group having 3 to 20 carbon atoms, or an arylene group having 6 to 20 carbon atoms.

A part or all of the nitrogen, phosphorus, and sulfur possessed by A⁴ may be protected by a hydrocarbylsilyl group or the like. A⁴ is preferably an amino group, a group having a carbon-nitrogen double bond, a nitrogen-containing heterocyclic group, a phosphino group, or a thiol group. The amino group, phosphino group, and thiol group herein include those protected with a trisubstituted hydrocarbylsilyl group or the like. When A⁴ is an amino group, examples thereof include a primary amino group, a nitrogen-containing group in which two hydrogen atoms of a primary amino group are substituted with two protective groups, a secondary amino group, a nitrogen-containing group in which one hydrogen atom of a secondary amino group is substituted with one protective group, a tertiary amino group.

Examples of the group having a carbon-nitrogen double bond of A⁴ include "-N=CR¹¹R¹²" (wherein R¹¹ is a hydrogen atom or a hydrocarbyl group and R¹² is a hydrocarbyl group). The description on the above R⁶ and R⁸ can be applied to R¹¹ and R¹².

The nitrogen-containing heterocyclic group is a group in which one hydrogen atom is removed from a nitrogen-containing heterocycle, and examples thereof include a 1-imidazolyl group, a 4,5-dihydro-1-imidazolyl group, a 1-piperidino group, a 1-piperazinyl group, a pyridyl group, a morpholino group.

The content ratio of the hydrogenated conjugated diene-based rubber in the rubber composition is preferably 20% by mass or more, more preferably 30% by mass or more, and still more preferably 40% by mass or more relative to the total amount of the rubber composition.

As for the blend ratio of the low-molecular-weight component in the hydrogenated conjugated diene-based rubber, when a peak area in the range of 1.0×10³ to 2.5×10⁵ is taken as AL and a peak area of a molecular weight of 250,000 or more is taken as AH in the molecular weight distribution of the hydrogenated conjugated diene-based rubber as determined by GPC, the ratio of AL to the total area of AL and AH is 0.5% to 20%. Point five percent or more of AL can allow the rubber composition to have sufficient formability and 20% or less of AL can enhance the tensile strength and low hysteresis loss properties of the resulting crosslinked rubber. AL is more preferably 5% to 20% and still more preferably 10% to 20%.

The hydrogenated conjugated diene-based rubber of the present disclosure may be prepared by synthesizing a high-molecular-weight hydrogenated conjugated diene-based polymer and a low-molecular-weight hydrogenated conjugated diene-based polymer in separate reactors and subsequently mixing these hydrogenated conjugated diene-based polymers having different molecular weights. Alternatively, a hydrogenated conjugated diene-based rubber containing a low-molecular-weight component and a high-molecular-weight component may be prepared by synthesizing a hydrogenated conjugated diene-based polymer in one reactor so that the low-molecular-weight component may be regulated in the above ratio. The former is preferred in view of easily adjusting the blending ratio of the low-molecular-weight component and the latter is preferred in view of capability of inexpensively producing the rubber composition by a continuous polymerization method. Specific examples include a method for producing the conjugated diene-based rubber to be blended into the rubber composition of the present disclosure by a method including the following polymerization step and hydrogenation step.

### <Polymerization Step>

This step is a step of polymerizing a monomer containing a conjugated diene compound to obtain a conjugated diene-based rubber having an active polymer end. The conjugated diene compound to be used for the polymerization may be 1,3-butadiene alone or a conjugated diene compound other than 1,3-butadiene (hereinafter also referred to as "other conjugated diene compound") may be used in combination. Examples of the other conjugated diene compound include isoprene, 2,3-dimethyl-1,3-butadiene, 1,3-pentadiene, 1,3-hexadiene, 1,3-heptadiene, 2-phenyl-1,3-butadiene, 3-methyl-1,3-pentadiene, 2-chloro-1,3-butadiene. Among these, isoprene and 2,3-dimethyl-1,3-butadiene are preferable. In the polymerization, the use ratio of 1,3-butadiene is preferably 50% to 95% by mass, more preferably 60% to 90% by mass relative to the total amount of the monomers to be used in the polymerization, from the viewpoint of good balance between the formability of the rubber composition and the strength of the resulting crosslinked rubber.

The conjugated diene-based rubber in the disclosure is a copolymerized rubber of the conjugated diene compound and an aromatic vinyl compound from the viewpoint of improving the strength of the resulting rubber. Examples of the aromatic vinyl compound to be used in the polymerization include styrene, 2-methylstyrene, 3-methylstyrene, 4-methylstyrene, α-methylstyrene, 2,4-dimethylstyrene, 2,4-diisopropylstyrene, 4-t-butylstyrene, 5-t-butyl-2-methylstyrene, vinylethylbenzene, divinylbenzene, trivinylbenzene, divinylnaphthalene, t-butoxystyrene, vinylbenzyldimethylamine, (4-vinylbenzyl) dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinylpyridine, diphenylethylene, a tertiary amino group-containing diphenylethylene (e.g., 1-(4-N,N-dimethylaminophenyl)-1-phenylethylene). Of these, as the aromatic vinyl compound, styrene and α-methyl styrene are preferable.

Regarding the conjugated diene-based rubber being a copolymerized rubber of the conjugated diene compound and the aromatic vinyl compound, the copolymerized rubber preferably contains 1,3-butadiene and styrene in the monomer composition in view of high livingness during anionic polymerization. The copolymerized rubber has a randomly copolymerized portion in which the conjugated diene compound and the aromatic vinyl compound are irregularly distributed. The copolymerized rubber may further have a block composed of the conjugated diene compound or the aromatic vinyl compound.

For the conjugated diene-based rubber being a copolymerized rubber of the conjugated diene compound and the aromatic vinyl compound, the use ratio of the aromatic vinyl compound is preferably 3% to 55% by mass, and more preferably 5% to 50% by mass, relative to the total amount of the conjugated diene compound and the aromatic vinyl compound used for polymerization, from the viewpoint that the low hysteresis loss and the wet skid resistance of the resulting crosslinked rubber are well-balanced. The content ratio of the structural unit derived from the aromatic vinyl compound in the polymer is determined by ¹H-NMR. Each of the conjugated diene compounds and the aromatic vinyl compounds may be used alone or two or more thereof in combination.

At the polymerization, a compound other than the conjugated diene compound and the aromatic vinyl compound (hereinafter also referred to as "other monomer") may also be used. Examples of the other monomer include acrylonitrile, methyl (meth)acrylate, ethyl (meth)acrylate. The use ratio of the other monomer is preferably 15% by mass or less, more preferably 10% by mass or less, and further preferably 5% by mass or less relative to the total amount of the monomers to be used in the polymerization.

As the polymerization method to be used, any of a solution polymerization, a vapor-phase polymerization, or a bulk polymerization may be used, but a solution polymerization is particularly preferable. Moreover, as a polymerization process, either of a batch-wise process and a continuous process may be used. The conjugated diene-based rubber to be blended into the rubber composition of the present disclosure can be synthesized by applying the continuous polymerization process, which is suitable in view of capability of reducing costs. When the solution polymerization method is used, examples of a specific polymerization include a method of polymerizing the monomer containing the conjugated diene compound in an organic solvent in the presence of a polymerization initiator and a randomizer that is used as needed.

At least either of an alkali metal compound and an alkaline-earth metal compound may be used as the polymerization initiator. Specific examples thereof include alkyllithiums such as methyllithium, ethyllithium, n-propyllithium, n-butyllithium, sec-butyllithium, and tert-butyllithium, 1,4-dilithiobutane, phenyllithium, stilbenelithium, naphthyllithium, 1,3-bis(1-lithio-1,3-dimethylpentyl)benzene, 1,3-phenylene-bis(3-methyl-1-phenylpentylidene)dilithium, naphthylsodium, naphthylpotassium, di-n-butylmagnesium, di-n-hexylmagnesium, ethoxypotassium, calcium stearate. Of these, lithium compounds are preferable. The total amount of the polymerization initiator to be used is preferably 0.2 to 20 mmol relative to 100 g of the monomer to be used in the polymerization.

The polymerization reaction may be performed using a mixture of at least either of an alkali metal compound or an alkaline-earth metal compound and a compound having a functional group that interacts with silica, as the polymerization initiator. The polymerization in the presence of the mixture allows for modifying the polymerization initiation end of the conjugated diene-based rubber with the functional group that interacts with silica. The term "functional group that interacts with silica" used herein refers to a group having an element such as nitrogen, sulfur, phosphorus, or oxygen that interacts with silica. The term "interaction" means that a covalent bond is formed between molecules, or an intermolecular force (intermolecular electromagnetic force such as ion-dipole interaction, dipole-dipole interaction, a hydrogen bond, or Van der Waals force) that is weaker than a covalent bond is formed.

The compound having a functional group that interacts with silica, which is used for modification of the polymerization initiation end, is particularly preferably a nitrogen-containing compound such as a secondary amine compound. Examples of the nitrogen-containing compound include dimethylamine, diethylamine, dipropylamine, dibutylamine, dodecamethyleneimine, N,N'-dimethyl-N'-trimethylsilyl-1,6-diaminohexane, piperidine, pyrrolidine, hexamethyleneimine, heptamethyleneimine, dicyclohexylamine, N-methylbenzylamine, di-(2-ethylhexyl)amine, diallylamine, morpholine, N-(trimethylsilyl)piperazine, N-(tert-butyldimethylsilyl)piperazine, 1,3-ditrimethylsilyl-1,3,5-triazinane. One of these compounds may be used alone or two or more thereof in combination.

At the time of the polymerization, at least either of the alkali metal compound and the alkaline-earth metal compound may be previously mixed with the compound having a functional group that interacts with silica, the resulting mixture may be added to the polymerization system, and then the polymerization may be performed. Alternatively, at least either of the alkali metal compound and the alkaline-earth metal compound and the compound having a functional group that interacts with silica may be added to the polymerization system. The both may be mixed in the polymerization system, and then the polymerization may be performed.

A randomizer can be used for the purpose of adjusting a vinyl bond content, which indicates a content ratio of vinyl bonds in the polymer. Examples of the randomizer include dimethoxybenzene, tetrahydrofuran, dimethoxyethane, diethylene glycol dibutyl ether, diethylene glycol dimethyl ether, 2,2-di(tetrahydrofuryl)propane, 2-(2-ethoxyethoxy)-2-methylpropane, triethylamine, pyridine, N-methylmorpholine and, tetramethyl ethyl enediamine. One of these compounds may be used alone or two or more thereof in combination.

The organic solvent to be used in the polymerization may be an organic solvent that is inert to the reaction. For example, an aliphatic hydrocarbon, an alicyclic hydrocarbon or an aromatic hydrocarbon can be used. Of these, a hydrocarbon having 3 to 8 carbon atoms is preferable and examples thereof include propane, n-butane, isobutane, n-pentane, isopentane, n-hexane, cyclohexane, propene, 1-butene, isobutene, trans-2-butene, cis-2-butene, 1-pentyne, 2-pentyne, 1-hexene, 2-hexene, benzene, toluene, xylene, ethylbenzene, heptane, cyclopentane, methylcyclopentane, methylcyclohexane, 1-pentene, 2-pentene and cyclohexene. As the organic solvent, one of the solvents may be used alone or two or more thereof in combination.

In the case of using the solution polymerization method, the monomer concentration in the reaction solvent is preferably 5 to 50% by mass, and more preferably 10 to 30% by mass, from the viewpoint of maintaining the balance between productivity and easiness of polymerization control. The polymerization reaction temperature is preferably -20 to 150°C, and more preferably 0 to 120°C. It is preferable to perform the polymerization reaction under a pressure sufficient to substantially maintain the monomer in a liquid phase. Such a pressure may be achieved by a method of pressurizing the reactor using an inert gas to the polymerization reaction, for example.

The conjugated diene-based polymer having an active chain end can be obtained by such a polymerization reaction. The weight average molecular weight (Mw) of the resulting conjugated diene-based polymer in terms of polystyrene, which is determined by GPC, is preferably 1.0×10⁴ to 2.0×10⁶. When Mw is less than 1.0×10⁴, the tensile strength, fuel efficiency, and abrasion resistance of the resulting crosslinked polymer are prone to decrease. When Mw is more than 2.0×10⁶, the formability of the rubber composition tends to decrease. Mw is more preferably 1.2×10⁴ to 1.5×10⁶, still more preferably 1.5×10⁴ to 1.0×10⁶.

In the conjugated diene-based polymer having an active chain end, the vinyl bond content (hereinafter also referred to as "vinyl content") in the butadiene unit is preferably 30 to 70% by mass. Thirty percent by mass or more of the vinyl content provides tires in which the conjugated diene-based polymer is used with sufficient grip properties. 70% by mass or less of the vinyl content allows for obtaining a vulcanized rubber having better mechanical strength and abrasion resistance. The vinyl content is more preferably 33 to 68% by mass, still more preferably 35 to 65% by mass. The "vinyl content" used herein is a value showing a content ratio of the structural unit having a 1,2-bond relative to the total structural units of butadiene in the conjugated diene-based polymer and is measured by ¹H-NMR

### <Coupling Step>

In the production of the hydrogenated conjugated diene-based rubber of the present disclosure, a coupling step may be included. In this step, when a part of the conjugated diene-based polymer having an active chain end obtained above is reacted with a coupling agent, a polymer solution containing a polymer having a molecular weight higher than that at the end of the above polymerization reaction can be obtained in one reactor. As the coupling agent, a polyfunctional compound having one or more atoms selected from the group consisting of nitrogen, silicon, phosphorus, sulfur, oxygen, titanium and tin, and capable of reacting with the polymerization active end of the conjugated diene-based polymer can be preferably used.

The polyfunctional compound is not particularly limited but includes the following compound (M-1), a polyfunctional iso(thio)cyanate compound, an amide compound, an imide compound, a pyridyl-substituted ketone compound, a pyridyl-substituted vinyl compound, a silicon compounds, an ester compound, a tin compound, an epoxy compounds, a phosphoric ester compounds, an acid anhydride group-containing compound, an aryl vinyl group-containing compound, a halogenated carbon group-containing compound. The "iso(thio)cyanate" means that it includes "isocyanate" and "isothiocyanate".

### <Compound (M-1)>

A compound having at least one functional group X that is at least one selected from the group consisting of a cyclic ether group, a (thio)carbonyl group, and an iso(thio)cyanate group and at least one group Y having at least one atom selected from the group consisting of nitrogen, phosphorus, oxygen, and sulfur (provided that at least any of the nitrogen atom, phosphorus atom, and sulfur atom may be protected with a trisubstituted hydrocarbylsilyl group) and having no active hydrogen, which is different from the above functional group X.

Examples of the polyfunctional compound include, as compounds having a cyclic ether group among the compounds (M-1), epoxyamine compounds such as tetraglycidyl-1,3-bisaminomethylcyclohexane; as compounds having a (thio)carbonyl group, e.g., 4-aminoacetophenones such as 4-N,N-dimethylaminobenzophenon; bis(dihydrocarbylaminoalkyl) ketones such as 1,7-bis(methylethylamino)-4-heptanone; dihydrocarbylaminoalkyl (meth)acrylates such as 2-dimethylaminoethyl acrylate; hydrocarbylimidazolidinones such as 1,3-dimethyl-2-imidazolidinone; N-hydrocarbylpyrrolidones such as 1-phenyl-2-pyrrolidone; N-hydrocarbylcaprolactams such as N-methyl-ε-caprolactam; N-dihydrocarbylformamides such as N,N-diethylformamide; N,N-dihydrocarbylacetamides such as N,N-dimethylacetamide; (meth)acrylamides such as N,N-dimethylacrylamide; as compounds having an iso(thio)cyanate group, e.g., 3-isocyanatopropyltrimethoxysilane. The "(thio)carbonyl" means that it include "carbonyl" and "thiocarbonyl". Herein, the "active hydrogen" refers to a hydrogen atom that is bonded to an atom other than a carbon atom, and preferably refers to a hydrogen atom that has a bonding energy lower than that of the carbon-hydrogen bond of polymethylene.

Moreover, the polyfunctional iso(thio)cyanate compounds include 2,4-tolylene diisocyanate, 2,6-tolylene diisocyanate, diphenylmethane diisocyanate, naphthalene diisocyanate, triphenylmethane triisocyanate, p-phenylene diisocyanate, tris(isocyanatophenyl) thiophosphate, xylene diisocyanate, benzene-1,2,4-triisocyanate, naphthalene-1,2,5,7-tetraisocyanate, 1,4-phenylene diisothiocyanate;
the amide compounds or the imide compounds include succinamide, phthalamide, succinimide, maleimide, phthalimide; the pyridyl-substituted ketone compounds or the pyridyl-substituted vinyl compounds include dibenzoylpyridine, diacetylpyridine, divinylpyridine; the silicon compounds include dibutyldichlorosilicon, methyltrichlorosilicon, methyldichlorosilicon, tetrachlorosilicon (silicon tetrachloride), silicon tetrabromide, silicon tetraiodide, trichloromethoxysilane, tribromomethoxysilane, trimethoxysilane, methyltriethoxysilane, tetramethoxysilane, tetraethoxysilane;
the ester compounds include dimethyl adipate, dimethyl terephthalate, dimethyl phthalate; the tin compounds include tetrachlorotin, tetrabromotin, trichlorobutyltin, trichloromethyltin, trichloroethyltin, trichlorophenyltin, trichlorooctyltin, butyltin trisoctanoate, dibutyltin bislaurate; the epoxy compounds include ethylene glycol diglycidyl ether, diglycidylated bisphenol A, 1,3,5-triglycidylbenzene; the phosphoric ester compounds include trichlorophosphine, tribromophosphine; the acid anhydride group-containing compounds include pyromellitic anhydride, a styrene-maleic anhydride copolymer; the aryl vinyl group-containing compounds include divinylbenzene, diisopropenylbenzene; and the halogenated carbon group-containing compounds include trichloropropane, tetrachlorobutane. One of these coupling agents may be used alone or two or more thereof in combination.

The use ratio of the coupling agent is, from the viewpoint of sufficiently proceeding the reaction, preferably 0.01 molar equivalent or more, more preferably 0.05 molar equivalent or more, as the amount of substituent capable of coupling in the coupling agent, relative to the metal atom that is contained in the polymerization initiator and participates in the polymerization reaction. Moreover, from the viewpoint of generating the low-molecular-weight component in the reactor, the use ratio of the coupling agent is preferably 0.2 molar equivalent or less, more preferably 0.1 molar equivalent or less, as the amount of substituent capable of coupling in the coupling agent, relative to the metal atom that is contained in the polymerization initiator and participates in the polymerization reaction.

The reaction of the conjugated diene-based polymer having an active chain end with the coupling agent can be, for example, performed as a solution reaction. The reaction temperature is usually the same as that in the polymerization reaction and is preferably -20°C to 150°C, more preferably 0 to 120°C. At a low temperature in the reaction, the viscosity of the rubber component after the reaction tends to increase and, at a high temperature in the reaction, the polymerization active end is prone to be deactivated. The reaction time is preferably 0.5 minutes to 3 hours, more preferably 1 minute to 1 hour. The method of adding the coupling agent is not particularly limited and includes a method of lump-sum addition, a method of split addition, and a method of continuous addition. As the reaction mode, either of a batch-wise mode and a continuous mode may be used. The present step is suitable for a continuous mode.

### <Modification Step>

After the above polymerization reaction or after the reaction of the conjugated diene-based polymer having an active chain end which is obtained by the polymerization reaction with the coupling agent, the active chain end of the conjugated diene-based polymer may be reacted with a compound having a functional group that interacts with silica. Such a reaction allows for obtaining a modified conjugated diene-based polymer in which the end of the conjugated diene-based polymer is modified. By performing this modification step and the following hydrogenation step after the reaction of a part of the conjugated diene-based polymer having an active chain end obtained by the polymerization reaction with the coupling agent, a hydrogenated conjugated diene-based rubber which contains a polymer whose one terminal or both terminals are modified as a low-molecular-weight component and contains a high-molecular-weight component can be obtained.

The compound having a functional group that interacts with silica, which is used for modifying the polymerization active end, is not particularly limited as long as it is capable of reacting with the polymerization active end but preferably has one or more functional groups selected from the group consisting of an amino group, a group having a carbon-nitrogen double bond, a nitrogen-containing heterocyclic group, a phosphino group, a thiol group and a hydrocarbyloxysilyl group, and is capable of reacting with the polymerization active end. Particularly, a hydrocarbyloxysilane compound represented by the following formula (2) or (4) can be preferably used: 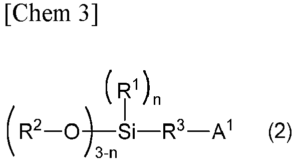 wherein A¹ is a monovalent functional group which has at least one atom selected from the group consisting of nitrogen, phosphorus and sulfur, does not have an active hydrogen, and bonds to R³ with a nitrogen atom, a phosphorus atom or a sulfur atom; R¹ and R² are each independently a hydrocarbyl group, R³ is a hydrocarbylene group, and n is an integer of 0 to 2; provided that a plurality of R¹ and R² groups are present, a plurality of R¹ groups may be the same or different from each other, and a plurality of R² groups may be the same or different from each other; 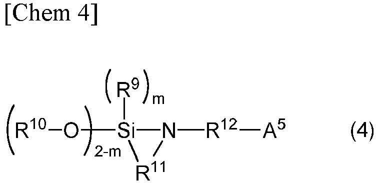 wherein A⁵ is a monovalent functional group which has at least one atom selected from the group consisting of nitrogen, phosphorus, sulfur and silicon, does not have an active hydrogen, and bonds to R¹² with a nitrogen atom, a phosphorus atom, a sulfur atom or a silicon atom; R⁹ and R¹⁰ are each independently a hydrocarbyl group, R¹¹ and R¹² are each independently a hydrocarbylene group, and m is 0 or 1; provided that a plurality of R¹⁰ groups are present, a plurality of R¹⁰ groups may be the same or different from each other.

In the above formulae (2) and (4), the description for R⁶ and R⁸ in the above formula (1) can be applied to the hydrocarbyl groups of R¹, R², R⁹, and R¹⁰, and the description for R⁷ in the above formula (1) can be applied to the hydrocarbylene groups of R³, R¹¹, and R¹². n is preferably 0 or 1 from the viewpoint of enhancing the reactivity with the active chain end of the conjugated diene-based rubber. A¹ has at least one specific atom selected from the group consisting of nitrogen, phosphorus, and sulfur and bonds to R³ with the specific atom. Also, A⁵ has at least one specific atom selected from the group consisting of nitrogen, phosphorus, sulfur, and silicon and bonds to R¹² with the specific atom. The specific atom of A¹ or A⁵ does not bond to an active hydrogen and may be protected with a protective group. The "protective group" is a functional group that converts A¹ or A⁵ into a functional group inactive to the polymerization active end and, includes a trisubstituted hydrocarbylsilyl group.

Especially, A¹ is preferably a group capable of becoming an onium ion by the action of an onium salt-forming agent. When the compound to be used for modification of the polymer has such a group (A¹), excellent shape-retaining properties can be imparted to the resulting hydrogenated conjugated diene-based rubber. Examples of A¹ include a nitrogen-containing group in which two hydrogen atoms of a primary amino group are substituted with two protective groups, a nitrogen-containing group in which one hydrogen atom of a secondary amino group is substituted with one protective group, a tertiary amino group, a group having a carbon-nitrogen double bond, a nitrogen-containing heterocyclic group, a phosphorus-containing group in which two hydrogen atoms of a primary phosphino group are substituted with two protective groups, a phosphorus-containing group in which one hydrogen atom of a secondary phosphino group is substituted with one protective group, a tertiary phosphino group and a sulfur-containing group in which one hydrogen atom of a thiol group is substituted with one protective group. Of these, from the viewpoint of good affinity to silica, A¹ is preferably a group having a nitrogen atom.

Examples of the compound represented by the formula (2) include, as compounds having a nitrogen-containing group in which two hydrogen atoms of a primary amino group are substituted with two protective groups, a nitrogen-containing group in which one hydrogen atom of a secondary amino group is substituted with one protective group, or a tertiary amino group and having an alkoxysilyl group, N,N-bis(trimethylsilyl)aminopropyltrimethoxysilane, N,N-bis(trimethylsilyl)aminopropylmethyldiethoxysilane, N,N',N'-tris(trimethylsilyl)-N-(2-aminoethyl)-3-aminopropyltriethoxysilane, 3-(4-trimethylsilyl-1-piperazino)propylmethyldimethoxysilane, compounds in which the alkyl group and/or the alkanediyl group in the above-mentioned compounds are replaced with an alkyl group having 1 to 6 carbon atoms and/or an alkanediyl group having 1 to 6 carbon atoms, respectively.

Examples of compounds having the group having a carbon-nitrogen double bond or the nitrogen-containing heterocyclic group and having the alkoxysilyl group, include N-(1,3-dimethylbutylidene)-3-(triethoxysilyl)-1-propaneamine, N-(1-methylpropylidene)-3-(triethoxysilyl)-1-propaneamine, N-(4-N,N-dimethylaminobenzylidene)-3-(triethoxysilyl)-1-propaneamine, N-(cyclohexylidene)-3-(triethoxysilyl)-1-propaneamine, N-(3-trimethoxysilylpropyl)-4,5-dihydroimidazole, N-(3-trimethoxysilylpropyl) imidazole, 3-hexamethyleneiminopropyltrimethoxysilane, 3-hexamethyleneiminopropylmethyldimethoxysilane, 3-(1-piperidino)propyltrimethoxysilane, 3-(1-hexamethyleneimino)propyltrimethoxysilane, 3-(1-piperadinyl)propyltrimethoxysilane, 3-morpholinopropyltrimethoxysilane, and compounds in which the alkyl group and/or the alkanediyl group in these compounds are replaced with an alkyl group having 1 to 6 carbon atoms and/or an alkanediyl group having 1 to 6 carbon atoms, respectively.

Examples of compounds having a phosphorus-containing group in which two hydrogen atoms of a primary phosphino group are substituted with two protective groups, a phosphorus-containing group in which one hydrogen atom of a secondary phosphino group is substituted with one protective group, a tertiary phosphino group, or a sulfur-containing group in which one hydrogen atom of a thiol group is substituted with one protective group and having an alkoxysilyl group include P,P-bis(trimethylsilyl)phosphinopropylmethyldimethoxysilane, P,P-bis(trimethylsilyl)phosphinopropyltrimethoxysilane, 3-dimethylphosphinopropyltrimethoxysilane, 3-dimethylphosphinopropylmethyldimethoxysilane, 3-diphenylphosphinopropyltrimethoxysilane, 3-diphenylphosphinopropylmethyldimethoxysilane, S-trimethylsilylmercaptopropylmethyldimethoxysilane, S-trimethylsilylmercaptopropyltrimethoxysilane, compounds in which the alkyl group and/or the alkanediyl group in these compounds are replaced with an alkyl group having 1 to 6 carbon atoms and/or an alkanediyl group having 1 to 6 carbon atoms, respectively. Examples of the compounds having an iso(thio)cyanate group include 3-isocyanatopropyltrimethoxysilane and 3-isocyanatopropyltriethoxysilane. One of the compounds represented by the above formula (2) may be used alone or two or more thereof in combination.

Examples of the compounds represented by the above formula (4) include 2-(2,2-dimethoxy-1,2-azasilolidin-1-yl)-N,N-diethyl ethan-1-amine, 2-(2,2-diethoxy-1,2-azasilolidin-1-yl)-N,N-diethylethan-1-amine, 3-(2,2-dimethoxy-1,2-azasilolidin-1-yl)-N,N-diethylpropan-1-amine, 2,2-diethoxy-1-(3-trimethoxysilylpropyl)-1,2-azasilolidine, 2,2-dimethoxy-1-(3-triethoxysilylpropyl)-1,2-azasilolidine and 2-methoxy-2-methyl-1-(3-trimethoxysilylpropyl)-1,2-azasilolidine. One of the compounds represented by the above formula (4) may be used alone or two or more thereof in combination.

The use ratio of the compound having a functional group that interacts with silica, which is used for modifying the polymerization active end, is preferably 0.01 mol or more and more preferably 0.05 mol or more relative to 1 mol of the metal atom participating in the polymerization reaction, which is contained in the polymerization initiator, from the viewpoint of achieving both of the formability of the rubber composition, and fracture resistance and viscoelasticity of the crosslinked rubber which is obtained by using the rubber composition. Moreover, an upper limit of the use ratio is preferably less than 0.1 mol and more preferably less than 0.05 ml relative to 1 mol of the metal atom participating in the polymerization reaction, which is contained in the polymerization initiator. The description for the above coupling step can be applied to various conditions in the modification reaction using the compound having a functional group that interacts with silica.

### <Hydrogenation Step>

In this step, the modified or unmodified conjugated diene-based polymer obtained above is hydrogenated. Any methods and conditions for hydrogenation may be used as long as a polymer having a desired hydrogenation rate is obtained. Examples of the hydrogenation methods include a method of using a catalyst in which an organometallic compound of titanium is a main component, as a hydrogenation catalyst, a method of using a catalyst composed of an organic compound of iron, nickel or cobalt and an organometallic compound such as alkylaluminum, a method of using an organic complex of an organometallic compound of ruthenium, rhodium, or the like, a method of using a catalyst in which metal such as palladium, platinum, ruthenium, cobalt and nickel is supported on a support such as carbon, silica, and alumina. Among various methods, a method of performing hydrogenation under mild conditions of low pressure and low temperature using a homogeneous catalyst composed of an organometallic compound of titanium alone or composed of the compound and an organometallic compound of lithium, magnesium, or aluminum (JP-B-63-4841, JP-B-1-37970) is industrially preferred. Such a method is suitable for the purpose of the present disclosure because hydrogenation selectivity to the double bond derived from butadiene is high.

The hydrogenation is performed in a solvent which is inactive to the catalyst and in which the modified conjugated diene-based polymer is soluble. A preferable solvent is an aliphatic hydrocarbon such as n-pentane, n-hexane, or n-octane, an alicyclic hydrocarbon such as cyclohexane or cycloheptane, an aromatic hydrocarbon such as benzene or toluene, an ether such as diethyl ether or tetrahydrofuran alone or a mixture containing them as main components.

The hydrogenation reaction is basically performed by keeping the polymer at a predetermined temperature under a hydrogen or inert atmosphere, adding a hydrogenation catalyst under stirring or under non-stirring, then introducing a hydrogen gas, and pressurizing the whole to a predetermined pressure. The inert atmosphere means an atmosphere which does not react with any components that participate in the hydrogenation reaction and comprises helium, neon, argon, or the like. Air and oxygen is not preferred since they involve deactivation of the catalyst through oxidation of the catalyst. Moreover, nitrogen is not preferred since it acts as a catalyst poison at the hydrogenation reaction and lowers hydrogenation activity. Particularly, it is suitable that the inside of the hydrogenation reactor is an atmosphere of hydrogen gas alone. For the hydrogenation reaction process that gives the hydrogenated conjugated diene-based rubber, any of a batch process, a continuous process, and a combination thereof may be used. The amount of the hydrogenation catalyst to be added is preferably 0.02 to 20 mmol per 100 g of the modified conjugated diene-based rubber before hydrogenation. The hydrogenation rate can be arbitrarily selected by varying the amount of the hydrogenation catalyst, hydrogen pressure at the hydrogenation reaction, and the reaction time.

The hydrogenation rate of the hydrogenated conjugated diene-based rubber of the present disclosure is 90% or more. In this case, the hydrogenation rates of the low-molecular-weight component and the high-molecular-weight component may be the same or different from each other and it is sufficient that the hydrogenation rate may be 90% or more as the whole hydrogenated conjugated diene-based rubber. Therefore, for example, when the hydrogenated conjugated diene-based rubber is a polymer blend composed of two or more kinds of polymers, it is sufficient that the hydrogenation rate measured by ¹H-NMR in a blended state is 90% or more. The hydrogenation rate is preferably 99% or less.

A preferable method of obtaining the hydrogenated conjugated diene-based rubber is a method of performing solution polymerization of a monomer containing butadiene in the presence of an alkali metal compound, performing a modification using the resulting polymer solution as it is, and subsequently subjecting the product to the hydrogenation step. Such a method is industrially useful. The hydrogenated conjugated diene-based rubber is obtained by removing the solvent from the solution obtained above and isolating the polymer. The rubber component can be isolated by a known solvent-removing method such as steam stripping and a drying operation such as a thermal treatment.

### <Other Components>

The rubber composition of the present disclosure contains the hydrogenated conjugated diene-based rubber as a rubber component but, if necessary, may contains other components than the hydrogenated conjugated diene-based rubber. Examples of the other components include silica, a crosslinking agent and an extender oil.

Examples of silica include wet silica (hydrated silica), dry silica (silicic anhydride), colloidal silica, precipitated silica, calcium silicate and aluminum silicate. Of these, wet silica is particularly preferable from the viewpoint of the effect of improving fracture resistance and the effect of achieving both of the wet grip properties and the low rolling resistance. It is also preferable to use high dispersible type silica from the viewpoint that the dispersibility of the silica in the rubber composition can be enhanced and also physical properties and formability can be improved. One of the silica may be used alone or two or more thereof in combination.

Into the rubber composition, various reinforcing fillers such as carbon black, clay, and calcium carbonate may be blended, in addition to silica as a filler. Preferably, at least one of silica and carbon is contained, and more preferably, silica alone is used or carbon black and silica are used in combination. The total amount of silica and carbon black in the rubber composition is preferably 1 to 150 parts by mass, more preferably 5 to 140 parts by mass, and still more preferably 20 to 130 parts by mass relative to 100 parts by mass of the hydrogenated conjugated diene-based rubber contained in the rubber composition.

Examples of the crosslinking agent include sulfur, sulfur halides, organic peroxides, quinone dioximes, organic polyamine compounds and methylol group-containing alkylphenol resins, and sulfur is normally used. The amount of sulfur to be blended is preferably 0.1 to 5 parts by mass, more preferably 0.5 to 3 parts by mass relative to 100 parts by mass of the total amount of the polymer components contained in the rubber composition.

As the extender oil, various oil known in the art may be referred and examples thereof include aromatic oil, paraffin-based oil, naphthene-based oil, vegetable oil, and oil having low content of polycyclic aromatic compounds (low PCA oil), e.g., mild extraction solvates (MES), oil obtained by treating an aromatic extract from a distillate (TDAE: treated distillate aromatic extract), special aromatic extract from a residue (SRAE: special residual aromatic extract), and heavy naphthene-based oil. Examples of commercially available MES, TDAE, and SRAE include Catenex SNR (heavy paraffin obtained by dewaxing a distillate with a solvent) manufactured by Shell as MES, Vivatec 500 manufactured by H&R Wasag AG as TDAE and NC140 manufactured by Japan Energy Corp. as SRAE. The extender oil may be blended into the rubber composition by directly adding the oil during rubber blending, or may be added into an elastomer and then the elastomer may be blended into the rubber composition.

The amount of the extender oil to be blended is preferably 10 to 100 parts by mass, more preferably 20 to 80 parts by mass relative to 100 parts by mass of the hydrogenated diene-based rubber in the rubber composition.

Into the rubber composition of the present disclosure, another rubber component may be blended in addition to the hydrogenated conjugated diene-based rubber. The kind of such a rubber component is not particularly limited but includes butadiene rubber (BR, e.g., high-cis BR having 90% or more of cis-1,4-bond, syndiotactic-1,2-polybutadiene (SPB)-containing BR), styrene-butadiene rubber (SBR), natural rubber (NR), isoprene rubber (IR), styrene-isoprene copolymer rubber and butadiene-isoprene copolymer rubber, and more preferred are BR and SBR.

Into the rubber composition of the present disclosure, in addition to the above-described components, various additives to be commonly used in the rubber composition for tire may be blended, such as an antioxidant, zinc oxide, stearic acid, a softening agent, sulfur, a vulcanization accelerator, a silane coupling agent, a compatibilizing agent, a vulcanization assistant, a processing aid, and a scorch retarder. The blending ratios thereof may be appropriately selected depending on various components in the ranges where the effects of the present disclosure are not impaired.

The rubber component in the rubber composition of the present disclosure and also component(s) to be added as needed are kneaded using a kneader such as an open-type kneader (e.g., roll) or a closed-type kneader (e.g., Banbury mixer), molded and then crosslinked (vulcanized) to obtain the crosslinked rubber. The crosslinked rubber is applicable to various rubber products. The crosslinked rubber can be applied to tires such as tire treads, undertreads, carcasses, sidewalls, and beads; sealing materials such as packings, gaskets, weatherstrippings, and O-rings; interior and exterior skins for various vehicles such as automobiles, ships, aircrafts, and railways; building materials; anti-vibration rubbers for industrial machines and facilities; various hoses and hose covers such as diaphragms, rolls, radiator hoses, and air hoses; belts such as power transmission belts; linings; dust boots; medical equipment materials; fenders; insulating materials for electric wires; and other industrial products. Particularly, the crosslinked rubber obtained using the rubber composition of the present disclosure is excellent in low hysteresis loss and mechanical strength and is suitable as a material for tire treads and sidewalls.

The production of tires can be performed according to usual methods. For example, the rubber composition of the present disclosure is mixed in a kneader and sheetform one is disposed at a predetermined position (for example, outside a carcass when the rubber composition is used for a sidewall) and vulcanized and molded according to a usual method to thereby form a tread rubber or a sidewall rubber, and thus a pneumatic tire is obtained.

### Examples

The following will specifically describe the present disclosure based on Examples but the contents of the present disclosure are not limited to these Examples. "part(s)" and "%" in Examples and Comparative Examples are on the basis of mass, unless otherwise specified. The following will show measuring methods of various physical property values.
[Bound styrene content (%)]: it was measured by 500 MHz ¹H-NMR
[Vinyl content (%)]: it was measured by 500 MHz ¹H-NMR.
[Glass transition temperature (°C)]: it was measured in accordance with ASTM D3418.
[Weight-average molecular weight after modification]: it was determined, in terms of polystyrene, from the retention time corresponding to the vertex of a maximum peak on the GPC curve obtained using gel permeation chromatography (GPC) (HLC-8120GPC (trade name (manufactured by Tosoh Corporation)).

The peak area of the low-molecular-weight component shown in the following Table 3 indicates the ratio of AL to the total area of AL and AH, when the peak area of a molecular weight of 1,000 to 250,000 is taken as AL and the peak area of a molecular weight of 250,000 or more is taken as AH, in the molecular weight distribution as determined by GPC method, for the hydrogenated conjugated diene-based rubber in a rubber composition. In the following Examples, the ratio is measured on a sample in which the hydrogenated conjugated diene-based rubber A and the hydrogenated conjugated diene-based rubber B weighed so as to be each blending ratio shown in the following Table 3 are placed in a sample tube and are dissolved in tetrahydrofuran so as to be the following concentration.

### (GPC conditions)

Column: trade name "GMHXL" (manufactured by Tosoh Corporation), two columns
Column temperature: 40°C
Mobile phase: tetrahydrofuran
Flow rate: 1.0 ml/minute
Sample concentration: 10 mg/20 ml
Detector: RI
[Mooney viscosity (ML1+4, 100°C)]: it was determined in accordance with JIS K6300-1 and using an L rotor under conditions of a preheating time of 1 minute, a rotor operation time of 4 minutes, and a temperature of 100°C.
[Hydrogenation rate (%)]: the hydrogenation rate of the butadiene unit was determined by 500 MHz ¹H-NMR.

### [Production Example 1]

### <Synthesis of Hydrogenated Conjugated Diene-based Polymer A>

Into an autoclave reactor of an internal volume of 50 L purged with nitrogen were charged 25,800 g of cyclohexane, 181 g of tetrahydrofuran, 1,419 g of styrene, and 2,795 g of 1,3-butadiene. After the temperature of content of the reactor was controlled to 42°C, a cyclohexane solution containing n-butyllithium (63.8 mmol) was added thereto to initiate polymerization. The polymerization was performed under adiabatic conditions and the maximum temperature reached 85°C.

At the time when the polymerization conversion reached 99%, 86 g of butadiene was additionally added and polymerization was further performed for 1 minute to obtain a reaction solution containing a polymer. To the reaction solution, 57.0 mmol of N,N-bis(trimethylsilyl)aminopropylmethyldiethoxysilane was added, followed by reaction for 15 minutes.

Then, the reaction solution was heated to 80°C or higher and hydrogen was introduced into the system. Thereafter, 2.80 g of [bis(η5-cyclopentadienyl)titanium(furfuryloxy) chloride] (also referred to as "[chlorobis(2,4-cyclopentadienyl)titanium (IV) furfuryl alkoxide]"), 2.84 g of diethylaluminum chloride, and 1.18 g of n-butyllithium were added thereto and the whole was reacted with 0.7 MPa or more of a hydrogen pressure kept. After the integrated flow rate of hydrogen reached a predetermined value, the temperature and pressure of the reaction solution was returned to normal and the reaction solution was taken out of the reaction vessel to obtain a polymer solution.

Subsequently, the temperature of the liquid phase of a solvent-removing tank was controlled to 95°C, the polymer solution was dissolved by steam stripping (steam temperature: 190°C) for 2 hours, and was dried with a hot roll that was temperature-controlled to 110°C, thereby obtaining a hydrogenated conjugated diene-based polymer A. Polymerization formulation of the resulting hydrogenated conjugated diene-based polymer A was shown in the following Table 1 and various physical properties and the like were shown in the following Table 2.

### [Production Example 2]

### <Synthesis and Evaluation of Hydrogenated Conjugated Diene-based Polymer B>

Polymerization was performed in the same manner as in Example 1 except that the amount of n-butyllithium to be added was changed to 23.5 mmol and the amount of N,N-bis(trimethylsilyl)aminopropylmethyldiethoxysilane to be added was changed to 11.4 mmol, thereby obtaining a hydrogenated conjugated diene-based polymer B (Table 1). Various physical properties and the like of the hydrogenated conjugated diene-based polymer B were shown in the following Table 2.

### [Examples 1 and 2 and Comparative Examples 1 to 3]

### <Production and Evaluation of Physical Properties of Rubber Composition and Crosslinked Rubber>

A rubber composition was produced by blending and kneading the hydrogenated conjugated diene-based polymer A, the hydrogenated conjugated diene-based polymer B obtained above and respective components according to the compounding formulation shown in the following Table 3. The kneading was performed by the following method. In the first kneading, the hydrogenated conjugated diene-based polymer A, the hydrogenated conjugated diene-based polymer B, silica, carbon black, the silane coupling agent, the extender oil, stearic acid, the antioxidant, and zinc oxide were blended and kneaded using a plastomill (internal volume: 250 ml) equipped with a temperature controller, at a filling rate of 72% and a rotation frequency of 60 rpm. Then, in the second kneading, after cooling the above-obtained blend to room temperature, sulfur and the vulcanization accelerator were blended into the blend, followed by kneading. The resulting blend was then molded, and vulcanized at 160°C for a given time using a vulcanizing press to obtain a crosslinked rubber. The following evaluation of physical properties (1) to (3) of the resulting crosslinked rubber and rubber composition was performed. The results are shown in the following Table 4.

### (1) Tensile Strength

A crosslinked rubber was used as a sample and tensile strength (TB) and elongation (EB) at break were measured in accordance with JIS K6251:2010. The measurement results are shown as indices where the result of the following Comparative Example 1 is taken as 100. The larger value of TB equates to the higher break strength, and the larger value of EB equates to the higher break elongation (viscoelasticity). (2) 50°C tan δ

A crosslinked rubber was used as a sample and it was measured using ARES-RDA (manufactured by TA Instruments) under conditions of a shear strain of 1.0%, an angular velocity of 100 radian/second, and 50°C. The measurement results are shown as indices where the result of Comparative Example 1 is taken as 100. The larger value equates to lower energy loss and better low hysteresis loss.

### (3) Formability

A rubber composition before vulcanization was wound on a 6-inch open roll at 60°C, the winding state on the roll was visually observed, and roll formability was evaluated as the following 4 stages (I to IV).
I: The composition adheres to and winds on the roll from the initial stage of rolling. Roll formability is extremely satisfactory.
II: The composition winds on the roll to some extent from the initial stage of rolling. There is no large problem on roll formability.
III: The composition does not wind at the initial stage of rolling but gradually winds on the roll. Roll formability is good.
IV: The composition exhibits no adherence property and does not wind on the roll. It is difficult to form a roll (sample is powdery or granular).

**[Table 1]**

| Polymerization formulation | Production Example 1 | Production Example 2 |
|---|---|---|
| Kind of hydrogenated conjugated diene-based polymer | A | B |
| Solvent | | |
| Cyclohexane (g) | 25800 | 25800 |
| Vinyl content regulator | | |
| Tetrahydrofuran (g) | 181 | 181 |
| Monomer for polymerization | | |
| Styrene (g) | 1419 | 1419 |
| Butadiene (g) | 2795 | 2795 |
| Additionally added butadiene (g) | 86 | 86 |
| Polymerization initiator | | |
| n-butyllithium (mmol) | 63.8 | 23.5 |
| Chain end modifier | | |
| Modifier A (mmol) | 57.0 | 11.4 |

In Table 1, the abbreviation of the modifier is as follows.

Modifier A: N,N-bis(trimethylsilyl)aminopropylmethyldiethoxysilane

**[Table 2]**

| Properties of hydrogenated conjugated diene-based polymer | Production Example 1 | Production Example 2 |
|---|---|---|
| Kind of hydrogenated conjugated diene-based polymer | A | B |
| Bound styrene content (wt%) | 33 | 31 |
| Vinyl content (%) Glass transition temperature (°C) | 42 -28 | 43 -30 |
| Weight-average molecular weight (×10⁴) | 12 | 60 |
| Mooney viscosity (ML1+4, 100°C) | 24 | impossible to measure |
| Hydrogenation rate of butadiene unit (%) | 94 | 95 |

**[Table 3]**

| Compounding formulation (phr) | Example 1 | Example 2 | Comparative Example 1 | Comparative Example 2 | Comparative Example 3 |
|---|---|---|---|---|---|
| Hydrogenated conjugated diene-based rubber | | | | | |
| Hydrogenated conjugated diene-based polymer A | 10 | 15 | - | 25 | 50 |
| Hydrogenated conjugated diene-based polymer B | 90 | 85 | 100 | 75 | 50 |
| Peak area of low-molecular-weight component (%) | 10 | 14 | 0.3 | 24 | 50 |
| Silica *1 | 70 | 70 | 70 | 70 | 70 |
| Carbon black *2 | 5.6 | 5.6 | 5.6 | 5.6 | 5.6 |
| Silane coupling agent *3 | 5.6 | 5.6 | 5.6 | 5.6 | 5.6 |
| Extender oil *4 | 37.5 | 37.5 | 37.5 | 37.5 | 37.5 |
| Stearic acid | 2 | 2 | 2 | 2 | 2 |
| Antioxidant *5 | 1 | 1 | 1 | 1 | 1 |
| Zinc oxide | 3 | 3 | 3 | 3 | 3 |
| Vulcanization accelerator CZ *6 | 1.8 | 1.8 | 1.8 | 1.8 | 1.8 |
| Vulcanization accelerator DPG *7 | 1.5 | 1.5 | 1.5 | 1.5 | 1.5 |
| Sulfur | 1.5 | 1.5 | 1.5 | 1.5 | 1.5 |

In Table 3, the trade names of each component are as follows:
*1: ZEOSIL 1165MP manufactured by Rhodia, *2: DIABLACK N339 manufactured by Mitsubishi Chemical Corporation, *3: Si75 manufactured by Evonik, *4: JOMO Process NC-140 manufactured by Japan Energy Corporation, *5: OZONONE 6C manufactured by Seiko Chemical Co., Ltd., *6: NOCCELER CZ manufactured by Ouchi Shinko Chemical Industrial Co., Ltd., *7: NOCCELER D manufactured by Ouchi Shinko Chemical Industrial Co., Ltd.

In Table 3, "-" means that the corresponding component was not used.

**[Table 4]**

| Physical properties of rubber composition/crosslinked rubber | Example 1 | Example 2 | Comparative Example 1 | Comparative Example 2 | Comparative Example 3 |
|---|---|---|---|---|---|
| Tensile Strength (index) | 96 | 94 | 100 | 88 | 76 |
| Elongation at break (index) | 102 | 104 | 100 | 101 | 108 |
| 50°C tanδ (index) | 102 | 104 | 100 | 105 | 105 |
| Formability | II | II | IV | II | I |

As apparent from the above results, the crosslinked rubbers of Examples 1 and 2 had all of the break strength, the break elongation, and the low hysteresis loss in good balance and also the formability of the rubber compositions was satisfactory. On the other hand, in Comparative Example 1, which has less than 0.5% of the low-molecular-weight component of the hydrogenated conjugated diene-based rubber, the formability remarkably worsened. Also, in Comparative Examples 2 and 3, which has more than 20% of the low-molecular-weight component of the hydrogenated conjugated diene-based rubber, the break strength remarkably worsened.

## Claims

1. A hydrogenated conjugated diene-based rubber having a hydrogenation rate of butadiene unit of 90% or more, wherein the conjugated diene-based rubber is a copolymerized rubber of the conjugated diene compound and an aromatic vinyl compound having a randomly copolymerized portion in which the conjugated diene compound and the aromatic vinyl compound are irregularly distributed, and wherein, in the molecular weight distribution of the hydrogenated conjugated diene-based rubber as determined by a gel permeation chromatographic method, when a peak area of a molecular weight of 1,000 to 250,000 is taken as AL and a peak area of a molecular weight of 250,000 or more is taken as AH, the ratio of AL to the total area of AL and AH is 0.5% to 20%.

2. The hydrogenated conjugated diene-based rubber according to claim 1, which has one or more atoms selected from the group consisting of nitrogen, silicon, phosphorus, sulfur, oxygen, titanium, and tin.

3. The hydrogenated conjugated diene-based rubber according to claim 1 or 2, which has one or more functional groups selected from the group consisting of an amino group, a group having a carbon-nitrogen double bond, a nitrogen-containing heterocyclic group, a phosphino group, a thiol group, and a hydrocarbyloxysilyl group at a polymer end.

4. A rubber composition containing 100 parts by mass of the hydrogenated conjugated diene-based rubber according to any one of claims 1 to 3 and 10 to 100 parts by mass of an extender oil.

5. The rubber composition according to claim 4 comprising at least one of silica and carbon in an amount of 1 to 150 parts by mass in total relative to 100 parts by mass of the hydrogenated conjugated diene-based rubber.

6. A crosslinked rubber, which is obtained by crosslinking the rubber composition according to claim 4 or 5.

7. A tire wherein the crosslinked rubber according to claim 6 is used as a material of at least a tread or a sidewall.

## Patentansprüche

1. Hydrierter Kautschuk auf Basis eines konjugierten Diens mit einer Hydrierungsrate der Butadieneinheit von 90% oder mehr, wobei der Kautschuk auf Basis eines konjugierten Diens ein copolymerisierter Kautschuk aus der konjugierten Dienverbindung und einer aromatischen Vinylverbindung mit einem statistisch copolymerisierten Teil ist, in dem die konjugierte Dienverbindung und die aromatische Vinylverbindung unregelmäßig verteilt sind, und wobei in der Molekulargewichtsverteilung des hydrierten Kautschuks auf der Basis eines konjugierten Diens, bestimmt durch ein Gelpermeationschromatographieverfahren, wenn eine Peakfläche mit einem Molekulargewicht von 1000 bis 250000 als AL genommen wird und eine Peakfläche mit einem Molekulargewicht von 250000 oder mehr als AH genommen wird, das Verhältnis von AL zu der Gesamtfläche von AL und AH 0,5% bis 20% ist.

2. Hydrierter Kautschuk auf Basis eines konjugierten Diens nach Anspruch 1, der ein oder mehrere Atome ausgewählt aus der Gruppe bestehend aus Stickstoff, Silicium, Phosphor, Schwefel, Sauerstoff, Titan und Zinn aufweist.

3. Hydrierter Kautschuk auf Basis eines konjugierten Diens nach Anspruch 1 oder 2, der an einem Polymerende eine oder mehrere funktionelle Gruppen ausgewählt aus der Gruppe bestehend aus einer Aminogruppe, einer Gruppe mit einer Kohlenstoff-Stickstoff-Doppelbindung, einer stickstoffhaltigen heterocyclischen Gruppe, einer Phosphinogruppe, einer Thiolgruppe und einer Hydrocarbyloxysilylgruppe aufweist.

4. Kautschukzusammensetzung, die 100 Massenteile des hydrierten Kautschuks auf Basis eines konjugierten Diens nach einem der Ansprüche 1 bis 3 und 10 bis 100 Massenteile eines Extenderöls enthält.

5. Kautschukzusammensetzung nach Anspruch 4, die zumindest eines von Siliciumdioxid und Kohlenstoff in einer Menge von insgesamt 1 bis 150 Massenteilen, bezogen auf 100 Massenteile des hydrierten Kautschuks auf Basis eines konjugierten Diens, umfasst.

6. Vernetzter Kautschuk, der durch Vernetzen der Kautschukzusammensetzung nach Anspruch 4 oder 5 erhalten ist.

7. Reifen, wobei der vernetzte Kautschuk nach Anspruch 6 als ein Material von zumindest einer Lauffläche oder einer Seitenwand verwendet wird.

## Revendications

1. Caoutchouc à base de diène conjugué hydrogéné ayant un taux d'hydrogénation de motif butadiène de 90 % ou plus, lequel caoutchouc à base de diène conjugué est un caoutchouc copolymérisé du composé diène conjugué et d'un composé vinylaromatique ayant une partie copolymérisée de manière statistique dans laquelle le composé diène conjugué et le composé vinylaromatique sont distribués irrégulièrement, et dans lequel, dans la distribution des masses moléculaires du caoutchouc à base de diène conjugué hydrogéné telle que déterminée par une méthode chromatographique d'exclusion diffusion, quand une superficie de pic d'une masse moléculaire de 1 000 à 250 000 est indiquée par AL et une superficie de pic d'une masse moléculaire de 250 000 ou plus est indiquée par AH, le rapport d'AL à la surface totale d'AL et d'AH est de 0,5 % à 20 %.

2. Caoutchouc à base de diène conjugué hydrogéné selon la revendication 1, qui a un ou plusieurs atomes choisis dans l'ensemble constitué par l'azote, le silicium, le phosphore, le soufre, l'oxygène, le titane, et l'étain.

3. Caoutchouc à base de diène conjugué hydrogéné selon la revendication 1 ou 2, qui a un ou plusieurs groupes fonctionnels choisis dans l'ensemble constitué par un groupe amino, un groupe ayant une double liaison carbone-azote, un groupe hétérocyclique azoté, un groupe phosphino, un groupe thiol, et un groupe hydrocarbyloxysilyle à une extrémité du polymère.

4. Composition de caoutchouc contenant 100 parties en masse du caoutchouc à base de diène conjugué hydrogéné de l'une quelconque des revendications 1 à 3 et 10 à 100 parties en masse d'une huile de dilution.

5. Composition de caoutchouc selon la revendication 4, comprenant au moins l'un parmi la silice et le carbone en une quantité de 1 à 150 parties en masse au total pour 100 parties en masse du caoutchouc à base de diène conjugué hydrogéné.

6. Caoutchouc réticulé qui est obtenu par réticulation de la composition de caoutchouc de la revendication 4 ou 5.

7. Pneu, dans lequel le caoutchouc réticulé de la revendication 6 est utilisé en tant que matériau d'au moins une bande de roulement ou un flanc.
